## Europäisches Patentamt
## European Patent Office
## Office européen des brevets

(19)

(11) Veröffentlichungsnummer: **0 184 160**
**B1**

(12) # EUROPÄISCHE PATENTSCHRIFT

(45) Veröffentlichungstag der Patentschrift:
**31.01.90**

(51) Int. Cl.⁴: **A 01 G 7/02**

(21) Anmeldenummer: **85115197.7**

(22) Anmeldetag: **29.11.85**

(54) **Verfahren zur qualitativen und quantitativen Verbesserung der Blattdüngung von Nutz- und Zierpflanzen in Gewächshäusern, im Freiland oder im Ackerbau.**

(30) Priorität: **03.12.84 DE 3444014**
**04.02.85 DE 3503710**

(43) Veröffentlichungstag der Anmeldung:
**11.06.86 Patentblatt 86/24**

(45) Bekanntmachung des Hinweises auf die Patenterteilung:
**31.01.90 Patentblatt 90/5**

(84) Benannte Vertragsstaaten:
**AT BE CH DE FR GB IT LI LU NL SE**

(56) Entgegenhaltungen:
CH-A- 562 556
DE-C- 866 341
FR-A- 2 264 087
US-A- 3 197 302
US-A- 3 532 485
US-A- 3 647 411

(73) Patentinhaber: **Technica Entwicklungsgesellschaft mbH & Co. KG, Robert-Bosch-Strasse 4-6, D-2418 Ratzeburg (DE)**

(72) Erfinder: **Kückens, Alexander, Bredenland, D-2401 Gross Sarau Post Gross Grönau (DE)**
Erfinder: **Köhl, Horst, Waldstrasse 40, D-2060 Bad Oldesloe (DE)**

(74) Vertreter: **Fricke, Joachim, Dr. et al, Dr. R. Döring, Dr. J. Fricke, Patentanwälte Josephspitalstrasse 7, D-8000 München 2 (DE)**

## Beschreibung

Die Erfindung betrifft ein Verfahren zum qualitativen und quantitativen Verbessern der Blattdüngung von Nutz- und Zierpflanzen in Gewächshäusern, Freiland und im Ackerbau, mit den Merkmalen des Oberbegriffs des Anspruchs 1.

Es ist bekannt, in geschlossenen Gewächshäusern das Giesswasser mit $CO_2$-Gas anzureichern, um so das Wachstum und die Widerstandskraft der Pflanzen gegen Krankheiten und Schädlinge zu verbessern und das Aufnahmevermögen für Nährstoffe zu erhöhen. Das mit $CO_2$ imprägnierte Wasser kann durch Giessen, Tröpfchenbewässerung, Rinnenbewässerung, durch Stau oder Verregnung ausgebracht werden (vgl. EP-A 0 078 964).

Es ist ferner bekannt für die Wurzel- oder die Blattdüngung eine Nährstofflösung vorzusehen, die unter einem Überdruck steht und die $CO_2$ in Anteilen zwischen 3 g $CO_2$ pro Liter Wasser bis hin zu 50 g $CO_2$ pro Liter Wasser enthält (vgl. US-A 3 532 485 und 3 647 411). Diese Druckschriften gehen davon aus, dass im Handel erhältliches flüssiges $CO_2$ ziemlich teuer ist und bei Begasung eines normalen Gewächshauses mit $CO_2$-Gas grosse Mengen dieses Gases benötigt werden. Durch die Einbringung des $CO_2$ in die flüssige Nährlösung und das Ausbringen dieser Nährlösung entweder in den Boden oder durch Versprühen auf die Blätter soll der Aufwand an $CO_2$ und Kosten verringert werden. Das $CO_2$-Gas wird in die Nährstofflösung unter erhöhtem Druck bis zu 25 Atmosphären eingebracht. Dabei lässt man das $CO_2$-Gas durch die frisch bereitete Nährlösung für längere Dauer (5 Min.) perlen, bis der pH-Wert entsprechend abgesunken ist. Der Vorgang wird so lange durchgeführt, bis sich die hohen gewünschten Anteile an $CO_2$ in der Nährflüssigkeit gelöst haben. Der Imprägnierungsdruck kann dabei gleichzeitig zum Versprühen der imprägnierten Nährlösung mittels Sprühdüsen oder dgl. benutzt werden. Dieses bekannte Verfahren soll sowohl in Gewächshäusern als auch im Freiland eingesetzt werden können.

Dieses seit 1966 bekannte Verfahren hat jedoch keinen praktischen Eingang in Gärtnereien oder in die Landwirtschaft gefunden. Hierfür gibt es mehrere Gründe. Einmal werden relativ hohe Drücke benötigt, um eine Nährlösung bei Umgebungstemperatur mit $CO_2$ in Anteilen zwischen 3 g und 50 g pro Liter zu imprägnieren. Der hohe Imprägnierungsgrad und der hohe Druck führen beim Versprühen zu einer plötzlichen Entspannung des Gasdruckes, so dass der grösste Teil des $CO_2$-Gehaltes aus der Nährlösung austritt, bevor diese die Blätter der Pflanzen erreicht. Die hohen Mengen an $CO_2$ pro Liter Wasser bereiten hohe Kosten, da reines $CO_2$ teuer ist. Die pro Hektar Kulturfläche benötigte $CO_2$-Menge ist dabei besonders hoch, wobei im Freiland nur ein geringer Anteil von dem $CO_2$-Gehalt von den Pflanzen aufgenommen werden kann.

Der Anteil der in der Nährflüssigkeit gelösten Nährsalze wird wesentlich durch den $CO_2$-Gehalt bestimmt. Nimmt dieser Gehalt bei Ausbringen der Nährlösung durch den abrupten Druckabfall plötzlich ab, so kann für die Nährsalze der Sättigungsgrad der Flüssigkeit überschritten werden und ein Teil der Nährsalze auskristallisieren. Diese Salze lagern sich in fester Form auf der Blattoberfläche ab und können diese beschädigen. Weiterhin haben Untersuchungen gezeigt, dass der Bedarf der Pflanzen an $CO_2$ und an durch das Gas im Verhältnis 1:1000 gebildeter Kohlensäure ($H_2CO_3$) nach unten und nach oben begrenzt ist. Mengen an $CO_2$ und $H_2CO_3$, die über diese Grenzen hinausgehen, haben nicht nur keinen Nutzen für die Pflanzen sondern können auch den Pflanzenwuchs behindern. So haben Versuche gezeigt, dass auf frisch zubereiteten humus- und nährstoffreichen Böden gezogene Pflanzen, die mit $CO_2$ enthaltendem Wasser behandelt werden, gegenüber nicht behandelten Pflanzen Ernteeinbussen erbringen. Da auch bei der Blattdüngung ein Teil der Nährlösung zwischen den Pflanzen in den Boden eindringt, kann auch das Wurzelwachstum der Pflanzen beeinträchtigt werden, da $CO_2$ für das Wurzelwachstum nur in sehr engen Anteilsgrenzen förderlich ist. Da gesundes Wurzel- und Blattwachstum massgeblich nicht nur für den Ernteertrag, sondern auch für die Resistenz der Pflanzen gegen Schädlings- oder Krankheitsbefall ist, ist der $CO_2$- und $H_2CO_3$-Gehalt von Nährlösungen auch von erheblichem Einfluss auf den Bedarf an Herbiziden und Pestiziden.

Es ist Aufgabe der Erfindung, ein Verfahren mit den Merkmalen des Oberbegriffs des Anspruchs 1 so weiterzubilden, dass die Kosten wesentlich gesenkt werden und den Pflanzen optimale Wachstumsbedingungen zur Verfügung gestellt werden. Dabei soll die Auskristallisierung von Nährsalzen oder dgl. aus der wässrigen Lösung beim Ausbringen der Lösung vermieden werden.

Das normale Absorptionsvermögen von Wasser bei einer Temperatur von etwa 20°C liegt für $CO_2$ Gas bei etwa 0,88 Liter Gas pro Liter reinem Wasser, was etwa 1,78 g $CO_2$ pro Liter Wasser entspricht. Da jedoch das normale Leitungswasser oder anderes für die vorliegenden Zwecke verwendete Wasser bereits Fremdgase oder andere Fremdstoffe enthält, liegt in der Praxis das normale Absorptionsvermögen des Wassers für $CO_2$ deutlich unter dem angegebenen Wert. Durch das neue Verfahren wird nun der Nährlösung bzw. dem für die Herstellung der Nährlösung verwendeten Giesswasser $CO_2$-Gas in Mengen zugeführt, die den Mengen bei normalem Absorptionsvermögen des Wassers entsprechen. Dadurch wird der $CO_2$-Gehalt und der Gehalt an $H_2CO_3$ der wässrigen Lösung oder des zu deren Herstellung verwendeten Wassers gegenüber dem ursprünglichen Gehalt erhöht, was zu einer wesentlichen Erhöhung des Lösungsvermögens des Wassers für die Nährsalze führt. Dies bedeutet einmal, dass die Nährsalze oder die anderen Stoffe der Lösung beim Ausbringen der Nährlösung wesentlich weniger leicht auskristallisieren können oder sich in anderer Weise absetzen können. Damit wird ein Verstopfen der Leitungen und Düsen des Düsen- oder Sprühsystems und Sedimentation oder Auskristallisation auf der Blattoberfläche oder der Aufnahmeorgane der Pflanzen weitgehend ausgeschlossen. Da die $CO_2$- und $H_2CO_3$-Zufuhr innerhalb der engen Grenzen des von Natur aus vorgegebenen ökologischen Umfeldes der Pflanze bleiben, werden Schädigungen oder Schwächungen der Pflanzen durch ein Übermass dieser Stoffe ausgeschlossen. Vielmehr werden den Pflanzen optimale Bedingungen geboten, welche sowohl ein gesundes Wurzelwachstum als auch ein kräftiges Wachstum der oberhalb der Erdoberfläche befindlichen Teile der Pflanze gewährleisten und so deren Widerstand gegen Schädlings- und Krankheitsbefall wesentlich erhöhen. Dadurch kann in den meisten Fällen der Einsatz an Herbiziden und Pestiziden gesenkt oder bei gleichbleibendem Einsatz der Ertrag gesteigert werden.

Die $CO_2$-Verluste beim Ausbringen der imprägnierten Nährlösung bleiben gering. Dadurch und durch die geringe pro Ackerfläche benötigte Menge an $CO_2$ sind die aufzubringenden Kosten trotz hohen Preises von reinem $CO_2$ gering und der wirtschaftliche Nutzen auch bei Einsatz im Freiland und im Ackerbau gross. Die Praxis hat gezeigt, dass pro Hektar Ackerland schon der Einsatz von 1000 g $CO_2$ ausreichend ist, so dass das $CO_2$ pro qm praktisch nur noch in Spuren vorliegt, wodurch sich der geringe Gehalt an $CO_2$ und $H_2CO_3$ als für ein gesundes und ertragreiches Wachstum der Pflanzen entscheidende Minimumfaktoren, insb. für die humus- und nährstofffarmen Böden, wie sie heute auch in der modernen Landwirtschaft vorliegen, erweist.

Die Verluste an $CO_2$ sind auch deshalb äusserst gering, da die Freisetzung des $CO_2$-Gases aus der Nährlösung in unmittelbarer Nähe der Stomata erfolgt, und zwar in Abhängigkeit vom Grad der Wasserverdunstung, wobei die $CO_2$-Gaskonzentration zunimmt. Die Giesswassertröpfchen wirken somit als $CO_2$-Speicher. So können Nährstoffe und $CO_2$ von den Pflanzen verstärkt aufgenommen und verwertet werden.

Der $CO_2$-Gehalt kann zweckmässigerweise zwischen 0,5 und 2 g/l Wasser eingestellt werden. Der Gehalt kann vorteilhafterweise bis hin zu 0,1 g/l erniedrigt werden.

In diesem Zusammenhang müssen die heute veränderten Qualitäten des Wassers in bezug auf $CO_2$ berücksichtigt werden. Giess- oder Düngewasser wird im allgemeinen aus Regen-, Leitungswasser oder aus einem Gemisch von beiden gedeckt; teilweise auch durch Oberflächen- oder Grundwasser, das über den Regen gebildet wird. Regen hat heute von Natur aus einen relativ niedrigen Gehalt an $CO_2$, trotz der Tatsache, dass die Konzentration in der Atmosphäre im Laufe des letzten Jahrhunderts stark zugenommen hat. Dies hängt damit zusammen, dass die Absorptionskraft eines Kondensats in bezug auf Schwefeldioxyd wesentlich höher liegt, nämlich – bei gleichen atmosphärischen Bedingungen und etwa 20 °C – bei ca. 40 l Gas $SO_2$ pro Liter Wasser

gegenüber 0,88 l $CO_2$. Das Wasser aus dem Leitungssystem wird aus technologischen Gründen (Korrosionsschutz) ebenfalls vom $CO_2$ befreit, respektive der Gehalt stark reduziert (siehe Bild der Wissenschaft, Heft 11/84, über die Bildung von Mineralwasser, insb. Seite 52). In diesem Artikel wird gleichzeitig auf die hohe Lösungsfähigkeit der Kohlensäure hingewiesen, der im Pflanzenbereich gleiche Bedeutung für die Wurzelverfügbarkeit zukommt. Es wurde durch bisherige praktische Versuche bestätigt, dass eine der Ursachen des heutigen Schädlingsbefalls der Pflanzen in einem $CO_2$- und $H_2CO_3$-Mangel liegt. Kohlensäure übt eine keimhemmende Wirkung aus. Dadurch bleiben z. B. Mineralwasser in ihrer Qualität auf natürliche Weise konserviert.

Die hier für Pflanzen angestellten Überlegungen gelten entsprechend auch für die Aufnahme von Mineralien und dgl. bei Tieren und Menschen.

Wesentliche Vorteile des neuen Verfahrens liegen in folgenden Punkten:

Durch den erhöhten $CO_2$-Gehalt wird das Lösungsvermögen des Wassers für die Nährsalze und damit die Nahrungsaufnahme direkt auch über die Blätter der Pflanzen wesentlich verbessert.

Mit der imprägnierten Nährlösung wird den Blättern und Pflanzen über die Stomata zugleich $CO_2$ zugeführt, das von den Pflanzen für die Assimilation benötigt wird. Und zwar erfolgt die Zuführung dosiert, also äusserst wirtschaftlich. Dabei wird die besonders ausgeprägte Eigenschaft von $CO_2$ und von $H_2CO_3$ ausgenutzt, Zellmembranen bei ausreichendem osmotischen leichter, als die meisten anderen Stoffe durchdringen zu können.

Der Einsatz von Fungiziden oder anderen Schädlingsbekämpfungsmitteln kann bei Verwendung von $CO_2$-imprägnierter Nährlösung wesentlich herabgesetzt werden, da $CO_2$ eine keimhemmende und eine die Widerstandskraft der Pflanzen stärkende Wirkung hat. Dabei können in der Praxis Einsparungen bis zu 50% erreicht werden.

Ablagerungen und Verkrustungen im Leitungs- und Sprühsystem werden durch den erhöhten $CO_2$-Gehalt in der Nährlösung ausgeschlossen, ebenso Porenverstopfungen und Fleckenbildung durch Ablagerung auf der Blattoberfläche.

Die Verluste an $CO_2$ im Vergleich zu der üblichen Atmosphärendüngung durch Einführen von $CO_2$-Gas in die Gewächshausatmosphäre sind ausserordentlich gering, so dass das Verfahren besonders wirtschaftlich durchgeführt werden kann.

Das $CO_2$ wird in der auf den Blättern niedergeschlagenen Nährflüssigkeit gepuffert und erst allmählich im Zuge der Verdunstung der Flüssigkeit den Stomata der Pflanzen zur Verfügung gestellt.

Bei Grosseinsatz des Verfahrens kann dieses noch wesentlich verbilligt werden, indem das Wasser mit aus der Aufbereitung von Abgasen, insb. von Rauchgasen, z. B. von Kraftwerken, ge-

wonnenem $CO_2$ mit nur technischer Reinheit, d.h. mit einem Reinheitsgrad bei oder niedriger als 99,5% feinst imprägniert wird. Auf diese Weise kann das Verfahren, das sich in der Praxis bis jetzt schon auch auf dem freien Feld in der Landwirtschaft als wirtschaftlich vorteilhaft erwiesen hat, weiter verbilligt werden.

Durch Verwendung von aus Rauchgasen gewonnenem, technisch reinem $CO_2$ wird gleichzeitig die das Klima negativ beeinflussende $CO_2$-Konzentration in der Troposphäre vermindert. Schädlingsbekämpfungsmittel werden bei Einsatz des neuen Verfahrens weitgehend entbehrlich oder in ihren Einsatzmengen zumindestens wesentlich reduziert.

Die neue Technologie erhöht ausserdem die Wirtschafltichkeit dadurch, dass die Düngemittel wesentlich gezielter auf den tatsächlichen Bedarf der Pflanzen eingestellt und damit wesentlich an ihnen gespart werden kann.

Es ist ferner bekannt, dass die heute in der Landwirtschaft notwendigen hohen Mengen an Düngemittel zu einer zunehmenden Belastung des Grundwassers führen. Dabei trägt wesentlich die Tatsache bei, dass einerseits die Pflanzen die in den Boden künstlich eingebrachten Nährstoffe nicht vollständig verwerten können und andererseits der Boden selbst die hohen Nährstoffkonzentrationen nicht halten kann. Die Nährstoffe, insb. Stickstoffverbindungen, werden daher durch den Regen unkontrolliert in das Grundwasser geschwemmt. Durch die angegebene Blattdüngung kann dieser Gefahr bereits wesentlich entgegengewirkt werden.

In vielen Fällen reicht die Nahrungszufuhr über die Blattdüngung alleine nicht aus. So lassen sich noch bessere und für die Pflanzen und das Grundwasser gleichermassen günstigere Verhältnisse erzielen, wenn man die Blattdüngung in Kombination mit der Bodendüngung in ganz gezielter Weise einsetzt, so wie dies in dem Anspruch 5 angegeben ist.

Untersuchungen haben nämlich gezeigt, dass nur bestimmte Nährsalze im hohen Masse der Gefahr unterliegen, dass sie in das Grundwasser eingeschwemmt werden. Hierzu gehören vor allen Dingen Stickstoff-Verbindungen und Spurenelemente.

Wenn man nun die das Grundwasser besonders belastenden Nährstoff-Elemente gezielt über die verbesserte Blattdüngung nach Anspruch 1 ausbringt, bleibt das Grundwasser weitgehend frei von diesen Belastungsstoffen, da, wie oben dargelegt, die weiterentwickelte Blattdüngung für eine gezielte und praktisch vollständige Aufnahme der über die Blattdüngung aufgebrachten Nährsalze Sorge trägt.

Dagegen können die das Grundwasser kaum oder wenig belastenden Nährsalze bei dem neuen Verfahren direkt oder getrennt von den das Grundwasser belastenden Stoffen in den Boden eingebracht werden, und zwar auf eine der herkömmlichen Weisen, jedoch vorteilhafterweise auch in Form einer Nährlösung, die mit $CO_2$ imprägniert ist. Die Düngung erfolgt so in einer Art Splitting-Verfahren, wobei die in den Boden direkt eingetragenen Nährsalze auch in der üblichen trockenen, körnigen Form ausgebracht werden können.

Das neue Splitting-Verfahren führt zu einer wesentlichen Herabsetzung der Belastung des Bodens und des Grundwassers mit überschüssigen Nährstoffen und Salzen, erlaubt eine gezieltere Düngung und führt zu wesentlichen Einsparungen an Salzmengen.

Durch das neue Verfahren können die Nachteile der seit langem fortschreitenden Humus-Verarmung der Böden und deren Folgen auf sparsame und ökologisch vernünftige Weise kompensiert werden.

Mit dem neuen Verfahren lässt sich vor allem auch der Einsatz von Herbiziden, Fungiziden und anderen Insektizien drastisch, z.B. bis zu 50%, senken, so dass die Belastung des Bodens und des Grundwassers durch die Stoffe in starkem Umfange abgebaut werden kann. Zu beachten ist, dass viele dieser Stoffe kaum oder nur schwer abbaubar sind. Neben der quantitativen Verbesserung der Nährstoffaufnahme erfolgt auch eine qualitative Verbesserung (Bildung von Hydrogenkarbonaten). Die erhöhte Aufnahmefähigkeit der Pflanzenoberfläche für Nährstoffe bleibt bei dem neuen Verfahren relativ lange erhalten, da bei der Wasserverdunstung die $CO_2$-Konzentration in dem sich verringernden Wasservolumen bis zum Abschluss der Absorption über die Oberfläche erhalten bleibt. Die $CO_2$- und damit die Nährstoffzufuhr erfolgt somit dosiert.

Die durch die $CO_2$-Imprägnierung ausgelöste erhöhte Nährstoff-Lösungskonzentration führt zu einer Erhöhung des osmotischen Druckes auf der Pflanzenoberfläche.

**Patentansprüche**

1. Verfahren zum qualitativen und quantitativen Verbessern der Blattdüngung von Nutz- und Zierpflanzen in Gewächshäusern, Freiland und im Ackerbau, bei dem eine wässrige Lösung vorbereitet wird, die wenigstens ein Nährsalz, Herbizid oder Pestizid und $CO_2$ enthält und die über Düsensysteme durch Vernebeln oder Versprühen direkt auf die Blätter der Pflanzen ausgebracht wird, dadurch gekennzeichnet, dass die wässrige Lösung oder das zu deren Herstellung verwendete Wasser bis zu einem Gehalt an $CO_2$ imprägniert wird, der etwa dem natürlichen Absorptionsvermögen von Wasser bei etwa 20°C und Atmosphärendruck entspricht und maximal 2 Gramm $CO_2$ pro Liter Wasser beträgt, und dass das $CO_2$ dabei in Feinstimprägnierung in das Wasser eingebracht wird.

2. Verfahren nach Anspruch 1, dadurch gekennzeichnet, dass der $CO_2$-Gehalt des Wassers auf einen Wert zwischen 0,10 und 2 Gramm pro Liter eingestellt wird.

3. Verfahren nach einem der Ansprüche 1 bis 2, dadurch gekennzeichnet, dass das Wasser mit $CO_2$ von einer Reinheit unter 99,5% feinst imprägniert wird, das aus Abgasen gewonnen wird.

4. Verfahren nach einem der vorangehenden Ansprüche 1 bis 3, dadurch gekennzeichnet, dass eine kombinierte Düngung im «splitting-Verfahren» angewendet wird, in dem die für die Blattdüngung vorgesehene, mit $CO_2$ feinstimprägnierte wässrige Lösung im wesentlichen nur mit solchen Nährstoffen, wie Stickstoffverbindungen, Spurenelementen oder dgl. bzw. mit Schädlingsbekämpfungsmitteln angereichert wird, die auf das Grundwasser belastend einwirken, während die übrigen Nährstoffe direkt oder als Lösung in den Kulturboden eingebracht werden.

## Claims

1. A method for the qualitative and quantitative improvement of foliar fertilisation of useful and ornamental plants in greenhouses, open land and in agriculture, in which an aqueous solution is prepared which contains at least one nutrient salt, herbicide or pesticide and $CO_2$, and is distributed directly via nozzle systems on to the leaves of the plants by atomising or spraying, characterised in that the aqueous solution or the water used for its production is impregnated up to a $CO_2$ content which corresponds approximately to the natural absorption capacity of water at about 20°C and atmosphere pressure and amounts to a maximum of 2 grams $CO_2$ per litre of water, and in that the $CO_2$ is introduced into the water in very fine dispersion.

2. A method according to Claim 1, characterised in that the $CO_2$ content of the water is set at a value between 0.10 and 2 grams per litre.

3. A method according to any one of Claims 1 to 2, characterised in that the water is very finely impregnated with $CO_2$ whose purity is below 99.5% and which is obtained from exhaust gases.

4. A method according to any one of the preceding claims 1 to 3, characterised in that a combined fertilisation in the «splitting method» is used in which the aqueous solution provided for the foliar fertilisation and very finely impregnated with $CO_2$ is enriched substantially only with those nutrients, such as nitrogen compounds, trace elements or the like, or with pest control agents, which have a charging effect on the base water, while the other nutrients are introduced into the cultivation soil direct or as a solution.

## Revendications

1. Procédé pour l'amélioration qualitative et quantitative de la fertilisation foliaire de plantes utiles et ornementales, dans des serres, en pleine terre et en agriculture, dans lequel on prépare une solution aqueuse qui renferme au moins un sel nutritif, un herbicide ou un pesticide et du $CO_2$, et est directement dispensée sur les feuilles des plantes par atomisation ou pulvérisation, par l'intermédiaire de systèmes à buses, caractérisé par le fait que la solution aqueuse ou l'eau utilisée pour son élaboration est imprégnée jusqu'à une teneur en $CO_2$ qui correspond sensiblement au pouvoir naturel d'absorption d'eau à environ 20°C et sous la pression atmosphérique, et est au maximum de 2 grammes de $CO_2$ par litre d'eau; et par le fait que le $CO_2$ est alors introduit dans l'eau par imprégnation fine maximale.

2. Procédé selon la revendication 1, caractérisé par le fait que la teneur de l'eau en $CO_2$ est réglée à une valeur comprise entre 0,10 et 2 grammes par litre.

3. Procédé selon l'une des revendications 1 à 2, caractérisé par le fait que l'eau est soumise à imprégnation fine maximale par du $CO_2$ d'une pureté inférieure à 99,5%, qui est récupéré à partir de gaz d'échappement.

4. Procédé selon l'une des revendications précédentes 1 à 3, caractérisé par l'application d'une fertilisation combinée selon le «procédé dissocié», dans lequel la solution aqueuse, prévue pour la fertilisation foliaire et soumise à imprégnation fine maximale par du $CO_2$, est enrichie pour l'essentiel seulement par des substances nutritives telles que des composés azotés, des oligo-éléments ou substances similaires, respectivement par des agents de traitement antiparasitaire exerçant un effet de charge sur les eaux souterraines, tandis que les autres substances nutritives sont introduites dans le sol de culture soit directement, soit sous la forme d'une solution.